# EUROPÄISCHE PATENTSCHRIFT

(11) **EP 1 465 817 B1**
(45) Veröffentlichungstag und Bekanntmachung des Hinweises auf die Patenterteilung: **26.10.2005**
(21) Anmeldenummer: 03702434.6
(22) Anmeldetag: 14.01.2003
(51) Int. Cl.: B65D 81/32, A23L 1/48, A23P 1/00, A23L 1/212, A23L 1/39, A23L 1/40, A23L 1/16

(54) **TROCKENES HALBFERTIGGERICHT**
DRY HALF-FINISHED MEAL
PLAT SEMI-FINI SEC

(30) Priorität: 16.01.2002 DE 10201377
(43) Veröffentlichungstag der Anmeldung: 13.10.2004
(73) Patentinhaber: Beltane Naturkost, 86381 Krumbach (DE)
(72) Erfinder: SCHLEKER, Elmar, Martin, 86476 Neuburg/Kammel (DE); SCHLEKER, Simone, Maria, 86476 Neuburg/Kammel (DE)
(74) Vertreter: Fischer, Matthias
(86) Internationale Anmeldenummer: PCT/EP2003/000295
(87) Internationale Veröffentlichungsnummer: WO 2003/059780

(56) Entgegenhaltungen:
- EP-A- 0 087 667
- PATENT ABSTRACTS OF JAPAN vol. 1998, no. 02, 30. Januar 1998 (1998-01-30) & JP 09 278047 A (RISUPATSUKU KK), 28. Oktober 1997 (1997-10-28)
- PATENT ABSTRACTS OF JAPAN vol. 018, no. 553 (C-1263), 21. Oktober 1994 (1994-10-21) & JP 06 197681 A (KIRA SHOKUHIN KK), 19. Juli 1994 (1994-07-19)
- DATABASE WPI Section Ch, Week 199531 Derwent Publications Ltd., London, GB; Class B04, AN 1995-232169 XP002236496 & CN 1 088 059 A (JIN C), 22. Juni 1994 (1994-06-22)
- PATENT ABSTRACTS OF JAPAN vol. 009, no. 192 (C-296), 8. August 1985 (1985-08-08) & JP 60 062959 A (HAUSU SHIYOKUHIN KOGYO KK), 11. April 1985 (1985-04-11)
- PATENT ABSTRACTS OF JAPAN vol. 1997, no. 12, 25. Dezember 1997 (1997-12-25) & JP 09 220064 A (SHOWA SANGYO CO LTD), 26. August 1997 (1997-08-26)
- PATENT ABSTRACTS OF JAPAN vol. 1995, no. 10, 30. November 1995 (1995-11-30) & JP 07 170948 A (KOWA SHOKUHIN KK), 11. Juli 1995 (1995-07-11)

## Beschreibung

Die Erfindung betrifft ein Verfahren zur Zubereitung eines trockenen Halbfertiggerichtes, welches bereits verpackt vorliegt und zur Zubereitung einer Mahlzeit dient, welche sich durch hohe sensorische Güte auszeichnet.

Trockene Halbfertiggerichte (im Folgenden als THF bezeichnet) bestehen aus Mischungen trockener oder getrockneter Zutaten, welche vom Verbraucher nach Zugabe einer Flüssigkeit, im allgemeinen Wasser, ggf. noch unter Zugabe von Speiseöl und/oder -fett, gegart werden, um daraus in kurzer Zeit eine Speise zuzubereiten. Im Sinne der vorliegenden Erfindung sind unter dem Begriff "Garen" solch typische Zubereitungsarten wie Kochen, Backen, Braten, Brühen, Dämpfen, Dünsten, Grillen, Rösten und Schmoren zu subsumieren.

THF enthalten eine oder mehrere typische Hauptzutaten. Im Sinne der vorliegenden Erfindung werden als Hauptzutaten solch Nahrungsmittel verstanden, welche physiologisch wirksam sind, wie z.B. Nudeln, Reis, Getreide, Kartoffeln, Fleisch, Gemüse, Eier, Brot, Milch, Früchte, im Unterschied zu solchen, welche geschmacksstimulierend oder als Aromaträger den Appetit und die Nahrungsausnutzung anregen, wie z.B. Kräuter und Gewürze. Daneben können in herkömmlichen THF noch Lebensmittelzusatzstoffe , wie z.B. Antioxidationsmittel, Bindemittel, Emulgatoren, Farbstoffe, Geschmacksverstärker, Konservierungsstoffe, Modifizierte Stärke, Säuerungsmittel, Säureregulatoren, Stabilisatoren, Süßungsmittel und Verdickungsmittel enthalten sein. Desweiteren enthalten herkömmliche THF meistens gehärtete Fette und Aromen.

Auf dem Markt werden THF in Packungen angeboten, in denen sämtliche für eine Zubereitung in Wasser erforderlichen Zutaten in einer Mischung enthalten sind EP 0087667 offenbart Trockensuppen, die getrocknete Gemüsestücke enthalten. Daneben gibt es noch sog. "Fix"-Halbfertiggerichte, welche in Kombination mit frischen Zutaten zubereitet werden. Derartige im Stand der Technik gebräuchlichen THF enthalten jedoch Inhaltsstoffe, deren gesundheitlicher Nutzen unter modemer emährungsphysiologischer Sicht äußerst umstritten ist. Soll ein Lebensmittel der EU-Bioverordnung (Verordnung EWG NR. 2092/91), den Richtlinien der Bioverbände (AGÖL Arbeitsgemeinschaft Ökologischer Landbau, Bioland, Demeter sowie alle wichtigen nationalen und internationalen Anbauverbände der IFOAM International Federation of Organic Agriculture Movements), und/oder den Richtlinien für das Ökoprüfzeichen ÖPZ und/oder den Richtlinien der Neuform für Reformwaren entsprechen, so darf es weder naturidentische oder künstliche Aromastoffe, Lebensmittelzusatzstoffe mit Ausnahme der in Anhang 1 aufgeführten, noch gehärtete Fette enthalten. Die Richtlinien der Bioverbände gehen dabei zum Teil noch über die EG-Bioverordnung 2092/91 hinaus, z.B. dürfen auch natürliche Aromen bei verbandszertifizierten Waren nur noch dann eingesetzt werden, wenn es sich um "FTNF" (From The Named Fruit) - Aromen handelt. Die im Lebensmitteleinzelhandel angebotenen THF werden aufgrund der Zusammensetzung mit Aromastoffen, Lebensmittelzusatzstoffen und gehärteten Fetten von einer modernen Emährungsberatung nicht empfohlen

THF ohne diese strittigen Inhaltsstoffe werden im Lebensmitteleinzelhandel praktisch überhaupt nicht und im Natur- und Reformwarenbereich nur vereinzelt als z.B. Instantsuppen oder Kartoffelpulvergerichte angeboten. THF werden heute in erster Linie vom Verbraucher Zuhause zubereitet. Mit Ausnahme von Produkten aus Kartoffelpulver sind derartige THF sonst jedoch geschmacklich nicht überzeugend, weshalb sie auch in Restaurants, Kantinen, Mensen und Schulküchen keine Verwendung finden. Selbst in Betrieben, an welche gewöhnlich geringere kulinarische Anforderungen gestellt werden, wie Bahnhofskneipen, Fast-Food-Restaurants oder Autobahngaststätten, werden üblicherweise keine THF zubereitet.

Der Erfindung liegt daher die Aufgabe zugrunde, ein Verfahren zur Zubereitung von trockenen Halbfertiggerichten zur Verfugung zu stellen, womit sich einerseits schnell und einfach Mahlzeiten hoher geschmacklicher Güte zubereiten lassen, deren Akzeptanz auch eine Verwendung in Restaurants, Kantinen, Mensen und Schulküchen erlaubt, und die andererseits auch den Anforderungen an eine gesunde, ausgewogene Ernährung, wie sie in einer modernen Ernährungsberatung gemäß den Beratungsstandards der DGE (Deutsche Gesellschaft für Ernährung) und der UGB (Verband für Unabhängige Gesundheitsberatung e.V.) zum Ausdruck kommt, entspricht.

Überraschend hat sich gezeigt, daß sich Mahlzeiten hoher gustatorischer und olfaktorischer Güte dann erzielen lassen, wenn man die Mischung aus trockenen bzw. getrockneten Zutaten vor der Zubereitung der fertigen Mahlzeit, insbesondere vor dem Garen der Hauptzutaten, zunächst in eine Wasserphase und eine Ölphase aufteilt. Für den Vertrieb eines derartigen gebrauchsfertigen Halbfertiggerichts werden die entprechend abgemessenen trockenen Zutaten für eine Mahlzeit dann separat in zwei Chargen verpackt angeboten.

Die erste Charge setzt sich aus den in wässriger Phase zu garenden Hauptzutaten, und Gewürzen und/oder Kräutern und/oder Würzmitteln und/oder konsistenzgebenden Zutaten oder Zusatzstoffen zusammen. Die zweite Charge besteht aus einem oder mehreren in Speiseöl und/oder Fett aufzuschließenden Gewürzen und/oder Kräutern und/oder Hauptzutaten. Die Zuordnung der Gewürze zur Fett- bzw. Wasserphase erfolgt so, daß temperaturempfindliche Gewürze und Kräuter, d.h. solche, die nicht über Kochtemperatur erhitzt werden sollen, der Wasserphase zugeordnet werden. Hierzu zählen empfindliche Kräuter und Würzmittel, Vanille, Zitrusfrüchte, Beeren, Trockenfrüchte und Trockengemüse. Alle anderen Gewürze und Kräuter (Frucht-, Samen-, Blüten-, Rinden- und Wurzelgewürze und robuste Kräuter und Ölsaaten), die nicht temperaturempfindlich sind, werden der Ölphase zugeordnet. Eine Zuordnung verschiedener Gewürze und Gewürzmittel zur Öl- oder Wasserphase, welche jedoch nur als Orientierungsrahmen dienen soll, ist in Tabelle 1 wiedergegeben.

Da bei Gewürzen und Kräutern die Temperatur für eine optimale Geschmacksfreisetzung in der Ölphase von ihrem jeweiligen Zerkleinerungsgrad abhängt (bei ganzen Gewürzen wird hierfür z.B. eine höhere Öltemperatur benötigt als bei fein gemahlenen), sind bei einer Kombination von Kräutern und Gewürzen deren jeweilige Mahlgrade (ganz - geschrotet - fein) so aufeinander abzustimmen, daß die jeweilige optimale Geschmacksfreisetzung bei möglichst gleicher Öltemperatur erfolgt.

Beim Erhitzen der Ölphase gehen dabei die den charakteristischen Geschmack der jeweiligen Mahlzeit mitbestimmenden fettlöslichen Inhaltsstoffe, insbesondere deren ätherischen Öle und/oder scharf-brennende Stoffe (u.a. Piperin, Capsaicin, Senföle, Alliin) in das Speiseöl und/oder -fett über und aromatisieren dieses. Ggf. können zu einer fertigen Trockenmischung auch frische Zutaten, insbesondere die Hauptzutaten, aber auch Kräuter und/oder Gemüse zugegeben werden. Sind diese nicht temperaturempfindlich und lassen sich der Ölphase zuordnen, können sie mit dem aromatisierten Öl glasiert werden.

In der wässrigen Phase werden die Hauptzutaten gegart und Gewürze und/oder Kräuter mit solchen geschmack- und geruchbildenden Inhaltsstoffen (ätherische Öle, Bitterstoffe, scharf-

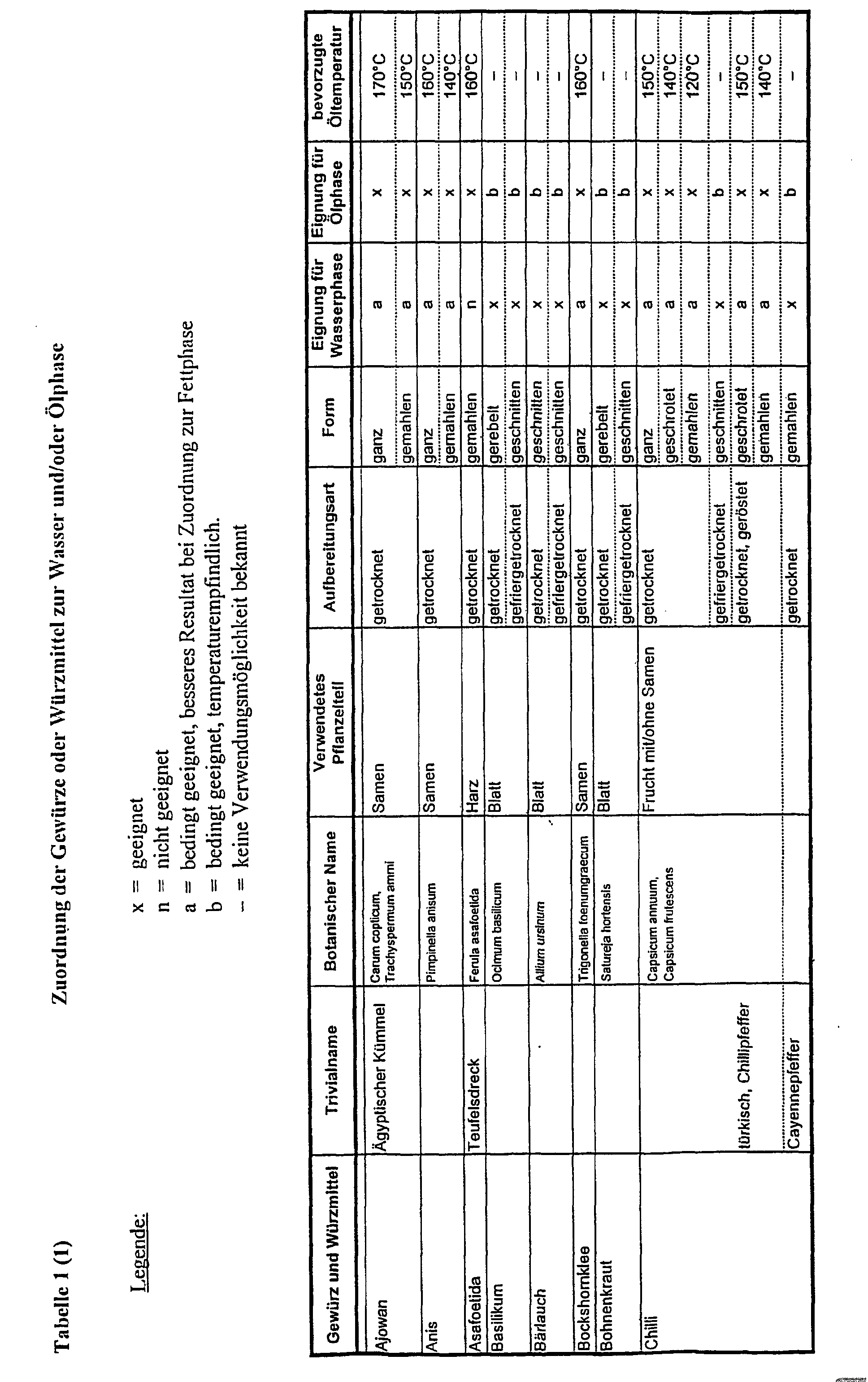

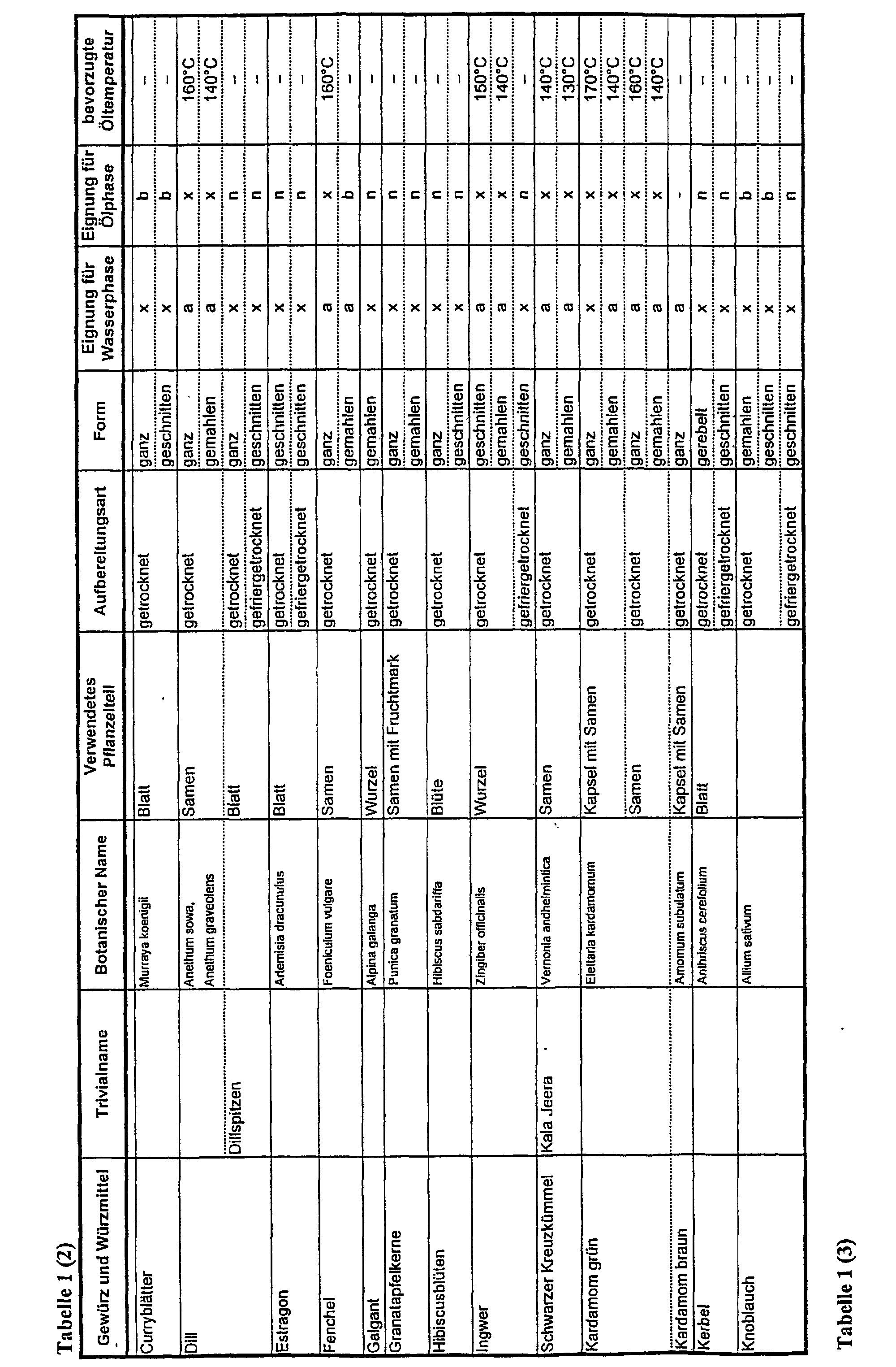

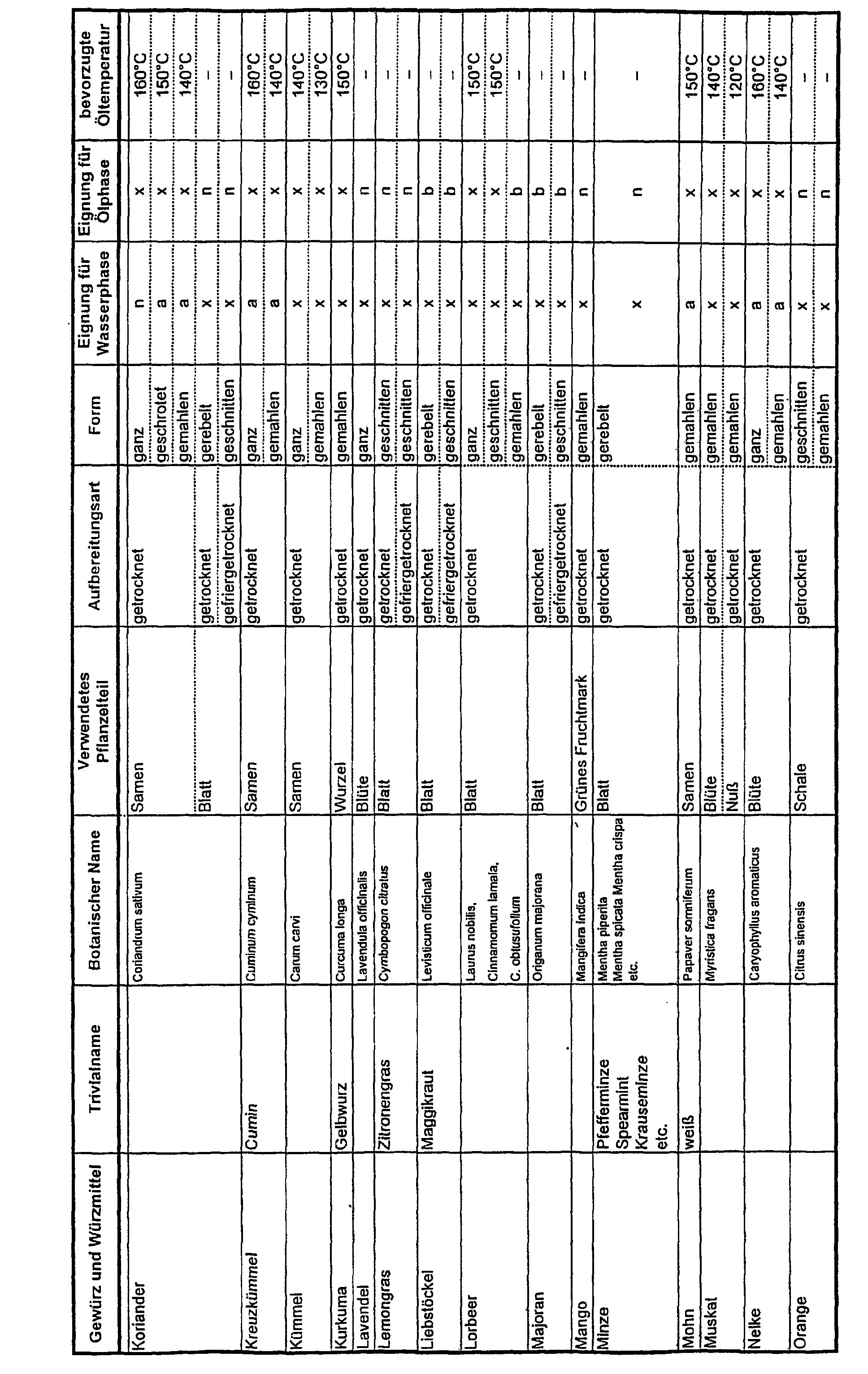

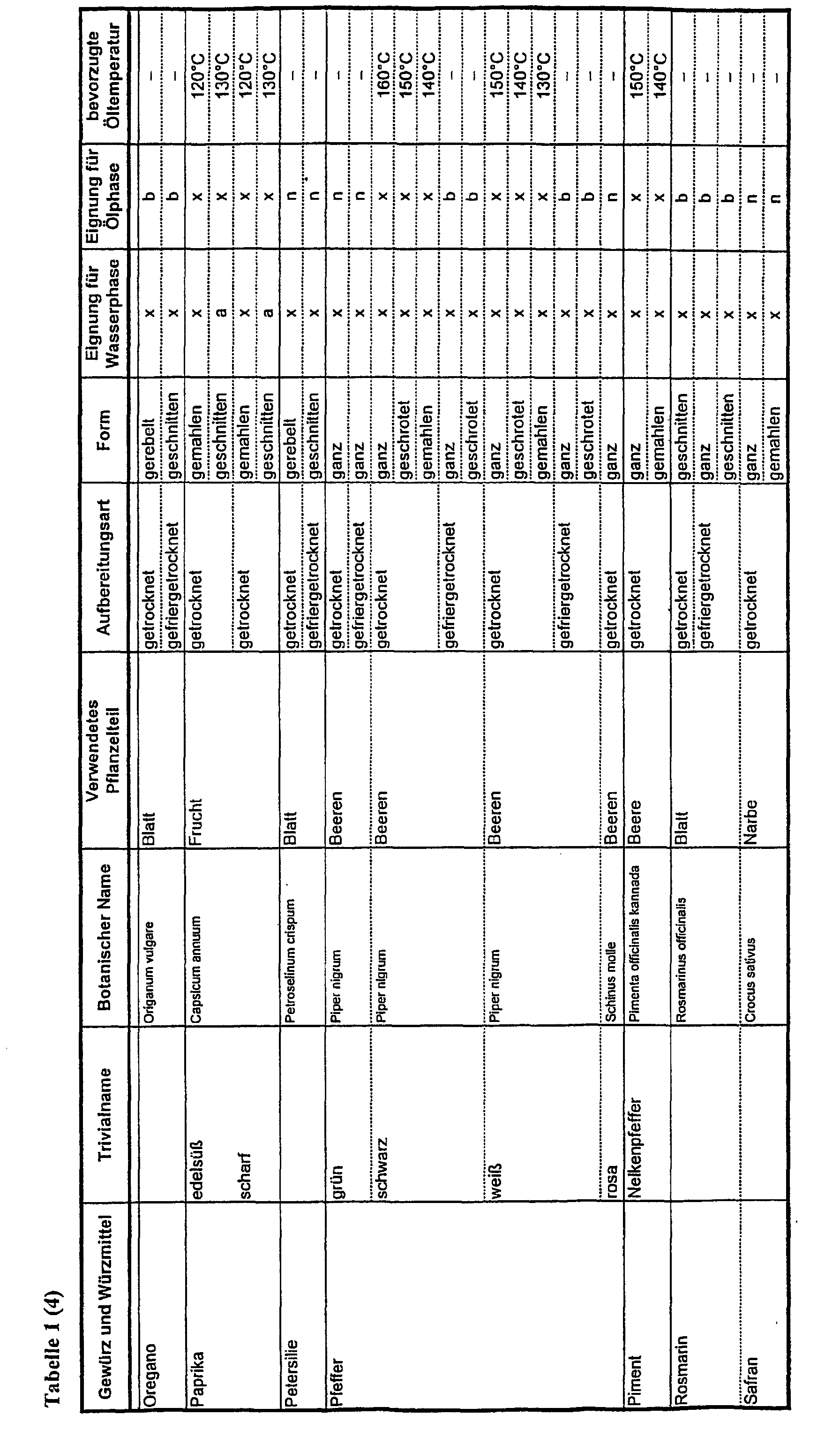

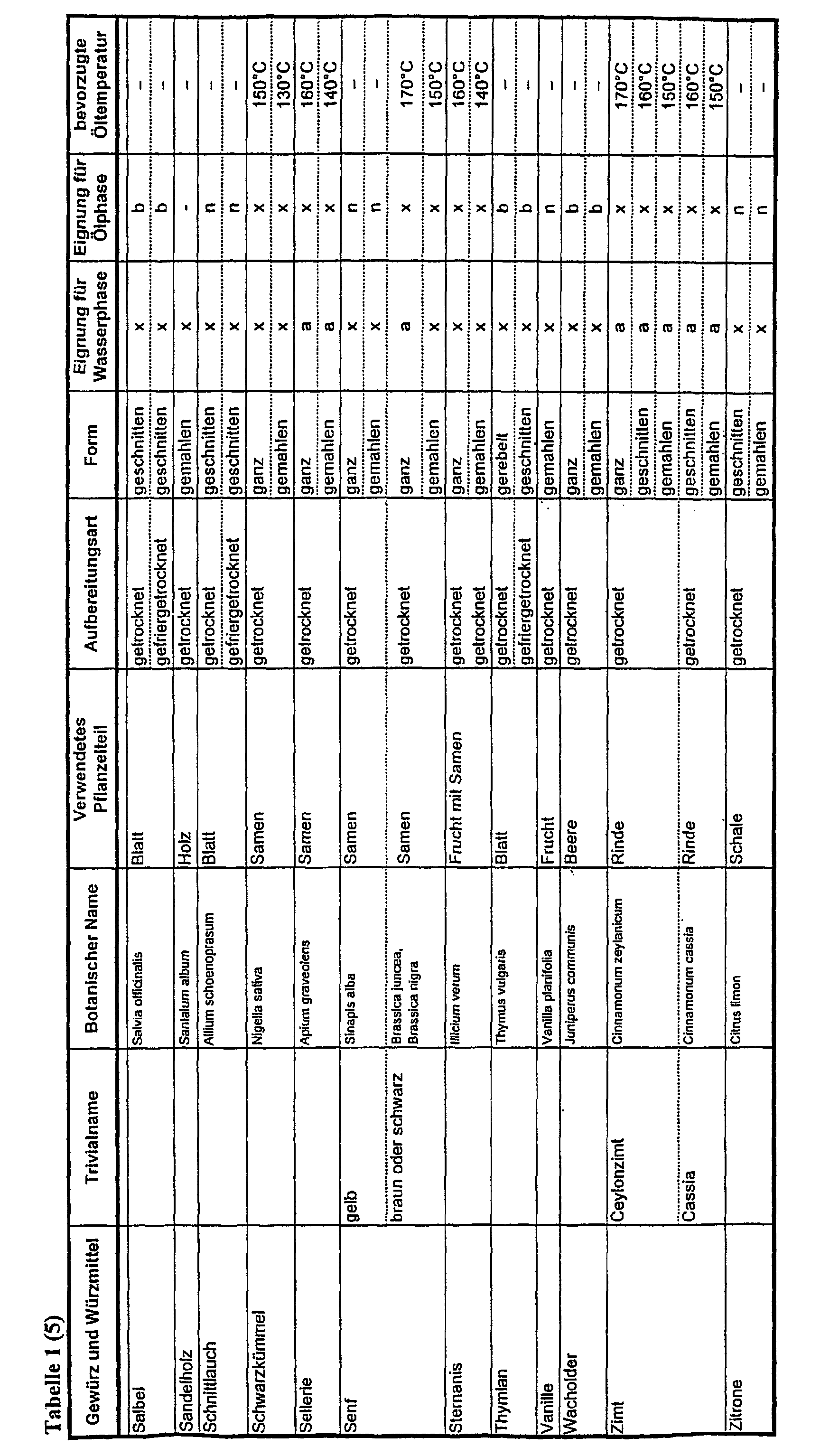

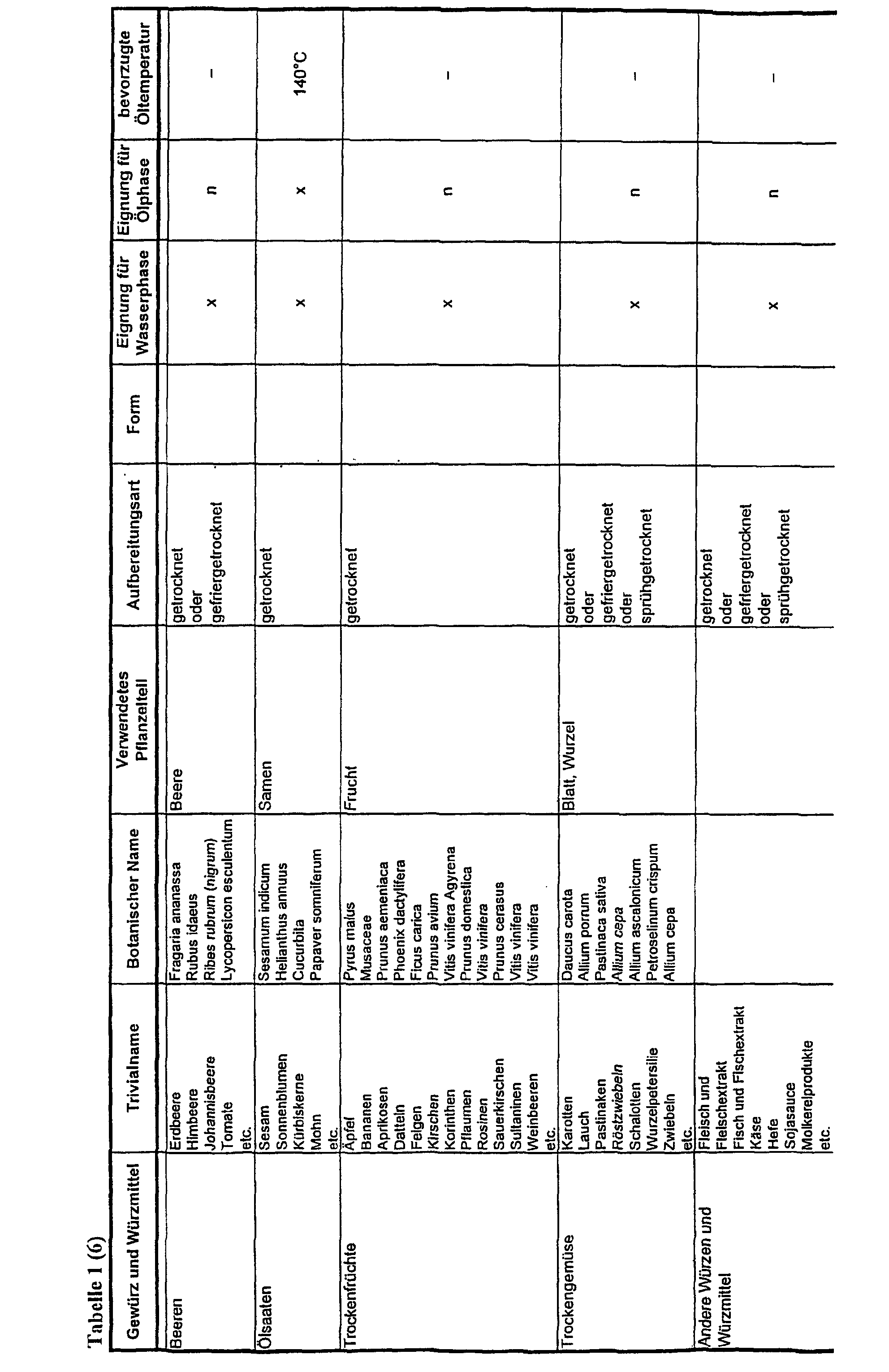

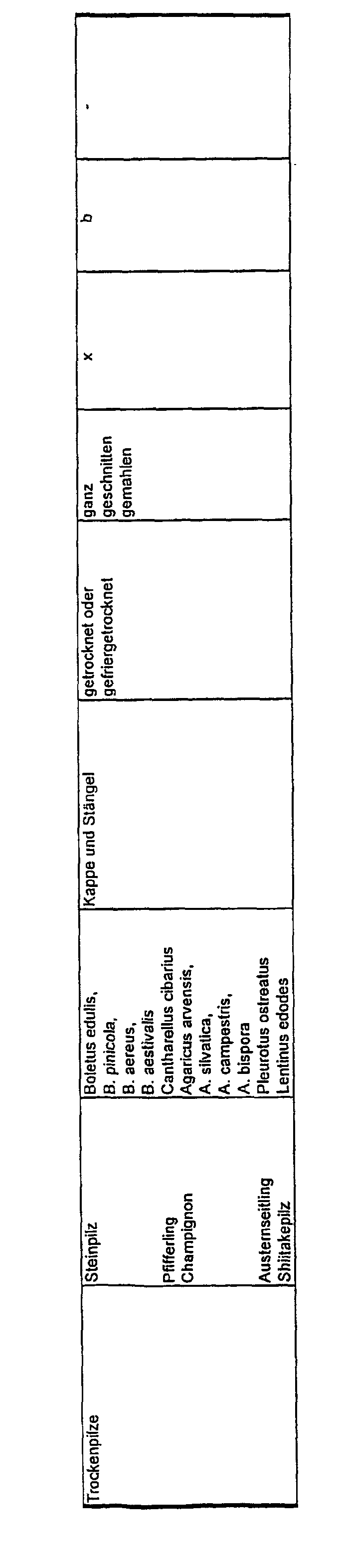

brennende Stoffe) aufgeschlossen, die nach dem Vermischen mit der aromatisierten Ölphase der jeweils zuzubereitenden Mahlzeit in Ergänzung zum Eigengeschmack und -geruch der Hauptzutaten nach dem Garen den erwünschten typischen gustatorischen und olfaktorischen Gesamteindruck verleihen.

Die in der Ölphase aufzuschließenden Gewürze und/oder Kräuter werden vom Verbraucher mit im Haushalt vorhandenen Speiseöl und/oder -fett vermischt und erhitzt. Die Gewürze und/oder Kräuter können dem Ö1 und/oder Fett vor dem Erhitzen zugemischt werden, oder das Öl und/oder Fett kann erst erhitzt und sodann die Gewürze und/oder Kräuter zugemischt werden. Indem die fettlöslichen ätherischen Öle und die scharf-brennenden Inhaltsstoffe in das Öl und/oder Fett übergehen wird letzteres aromatisiert. Dieser Vorgang ist abgeschlossen, sobald die im Öl und/oder Fett gelösten Aromastoffe entweder als Key components oder als Impact compound olfaktorisch deutlich warnehmbar sind.

Als "Impact compound" wird eine flüchtige Verbindung bezeichnet, wenn diese allein den typischen Aromaeindruck eines Gewürzes hervorruft; sind für ein typisches Aroma aber mehrere Einzelverbindungen verantwortlich, werden diese als "Key components" bezeichnet.

Falls lediglich Gewürze und/oder Kräuter angebraten werden, reichen hierfür wenige Sekunden im heißen Öl und/oder Fett. Die Temperatur beträgt dabei zwischen 120°C für 170°C. Falls frische Hauptzutaten mit angebraten werden, reichen hierfür 30 Sekunden bis 5 Minuten. Für die Zubereitung braucht dabei die Öl-/Fettemperatur nicht gemessen werden. In der Küchenpraxis hat es sich gezeigt, daß es ausreicht, darauf zu achten, daß die Gewürze und/oder Kräuter olfaktorisch deutlich wahrnehmbar sind und die Mischung nicht zu stark (über 180°C) erhitzt wird. Rauchendes oder gar siedendes Öl und/oder Fett ist unbedingt zu vermeiden. Dabei entständen ungesunde Transfettsäuren, unerwünschte Röststoffe und eine Gefahr durch spritzendes Öl und/oder Fett beim Ablöschen.

Alle anderen Zutaten, insbesondere die Hauptzutaten, werden mit Wasser vermischt und in wässriger Phase gegart. Mit der Wasserphase wird das aromatisierte Öl und/oder Fett abgelöscht. Das Vermischen der übrigen Zutaten mit Wasser kann dabei vor dem Ablöschen der aromatisierten Ölphase erfolgen, oder die aromatisierte Ölphase wird erst mit einer abgemessenen Menge Wasser abgelöscht und sodann die restlichen Zutaten zugegeben. Daraufhin wird das Gericht unter Erwärmen behandelt, bis die Hauptzutaten gar sind.

Das Aromatisieren des Speiseöls und/oder -fetts als erster Schritt eignet sich für die meisten Rezepturen. Nach dem Lösen der in der Ölphase aufgeschlossenen Inhaltstoffe kann auch eine Kochzeit bis zu 10 Minuten in Wasser den Extraktionsgrad der an sich fettlöslichen ätherischen Öle und/oder scharf-brennenden Stoffe nicht mehr merklich verändern.

Bei Gerichten mit Hauptzutaten, welche in der Wasserphase längere Garzeiten benötigen, wie z.B. Hülsenfrüchte, Vollkorngetreide, Vollreis, kann es vorteilhaft sein, diese zusammen mit den weiteren Zutaten für die Wasserphase zunächst in Wasser allein zu garen und die aromatisierte Ölphase erst am Ende der Garzeit zuzugeben. Dadurch wird vermieden, daß in den Zutaten für die Ölphase enthaltene bzw. bei längerem Garen gebildete Bitterstoffe und andere den Geschmack und/oder den Geruch beeinträchtigende Substanzen während des Garvorganges in die Wasserphase übergehen. Nach Zugabe der aromatisierten Ölphase am Schluß der Garzeit wird dann die Mahlzeit zum innigen Vermischen der Aromen und Geschmacksstoffe nur noch ca. 5 Minuten ziehen gelassen.

Da erfindungsgemäß die in der Ölphase aufzuschließenden Gewürz- und/oder Kräutermischung verpackungsmäßig getrennt von der mit den in der Wasserphase zu garenden Hauptzutaten vorliegen, besteht für den Hersteller der THF die Möglichkeit, die bereits mit der Gewürz- und/oder Kräutermischung aromatisierte Ölphase dem Verbraucher direkt in für ein spezifisches Gericht jeweils abgemessener Menge getrennt verpackt anzubieten. Das aromatisierte Öl ist dann lediglich in einer geeigneten Verpackung den übrigen Zutaten zum gewünschten Zeitpunkt beizufügen.

Hierfür eignet sich z.B. ein kunststoffkaschierter Aluminiumfolienbeutel, wie er für Ketchup- oder Senfportionsbeutel zur Anwendung kommt, oder ein Glasfläschchen, wie für Backaromen üblich. Geeignet sind auch eine oder mehrere Gelatine- oder Stärkekapseln, wie für medizinische Einnahmen gebräuchlich, welche den Vorteil haben, daß sie sich bei Kochen auflösen und dem Gericht Konsistenz geben. Geeignet ist auch ein Kräuterbonbon, welches als Füllung die Gewürz und/oder Kräuterextrakte enthält, oder ein geschlossener Salzkristall, welcher ebenfalls als Füllung die Gewürz und/oder Kräuterextrakte enthält, welche den Vorteil haben, daß sie sich bei Kochen auflösen und die Umhüllungen aus Zucker bzw. Salz zum Aromatisieren des Gerichtes verwendet werden können.

Das erfindungsgemäße Verfahren zur Zubereitung von Mahlzeiten aus den THF bietet die Möglichkeit, bei Herstellung der THF vollständig auf gesundheitlich umstrittene und unerwünschte, insbesondere chemisch modifizierte Lebensmittelzusatzstoffe zu verzichten, und damit dennoch eine Mahlzeit zuzubereiten, welche in ihrem sensorischen Gesamtbild sowie unter ernährungsphysiolocischen Gesichtspunkten einer aus frischen Zutaten zubereiteten Mahlzeit weitestgehend entspricht. Die mit den THF zubereiteten Mahlzeiten können den von Kantinen, Großküchen oder ambitionierten Restaurants gestellten kulinarischen Anforderungen genügen und darüber hinaus auch noch nach der EU-Bioverordnung (Verordnung EWG NR. 2092/91) bzw. den Richtlinien für Natur- und/oder Reformkost entsprechen. Wird andererseits auf eine Eignung für Natur- und Reformkost verzichtet, können auch anstelle von aromatisiertem Speiseöl aromatisiertes gehärtetes Fett oder nur gehärtetes Fett eingesetzt werden. Damit lassen sich immer noch Mahlzeiten zubereiten, die geschmacklich überzeugen. In diesem Falle kann dann auf eine getrennte Verpackung verzichtet werden.

Die Erfindung wird nun an den folgenden Beispielen näher erörtert.

### Beispiel 1

### Rote Linsen mit Gewürzen (Bengali Mazar Dal):

Die in Wasser zu garenden (getrockneten) Hauptzutaten und Gewürze der ersten separat zu verpackenden Charge setzen sich wie folgt zusammen:

| | |
|---|---|
| Rote Linsen (Masar Dal) | 225 g |
| Tomatenpulver (sprühgetrocknet) | 12 g |
| Salz | 8,25 g |
| Rohrzucker | 0,5 g |
| Paprika scharf, gemahlen | 1,7 g |
| Paprika edelsüß, gemahlen | 1,4 g |
| Ingwer, gemahlen | 1 g |
| Kurkuma, gemahlen | 0,65 g |
| Knoblauch, gefriergetrocknet | 0,75 g |
| Zwiebeln, gefriergetrocknet | 0,55 g |
| Petersilie, gefriergetrocknet | 0,32 g |
| Lorbeerblatt | ½ St |

Die in Speiseöl aufzuschließenden Gewürze und/oder Kräuter der zweiten separat zu verpackenden Charge setzen sich wie folgt zusammen:

| | |
|---|---|
| Kreuzkümmel, ganz | 0,9 g |
| Fenchel, ganz | 0,9 g |
| Schwarzer Senf, ganz | 0,9 g |
| Schwarzkümmel, ganz | 0,45 g |
| Bockshornklee, ganz | 0,45 g |
| Zimtsplitter | 0,25 g |

Die Gewürzmischung der zweiten Charge für die Ölphase wird in 2 Esslöffel Speiseöl gegeben und erhitzt; wahlweise werden die 2 Esslöffel Speiseöl zunächst erhitzt und dann die Gewürzmischung zugesetzt. Es wird solange erhitzt, bis die Gewürze ihren Duft verströmen, dann wird die heiße aromatisierte Ölphase mit 780 ml abgelöscht. Sodann wird die Mischung der ersten Charge mit den Hauptzutaten zugegeben, umgerührt, aufgekocht und 20 Minuten unter zeutweiligem Umrühren geköchelt.

Da es sich bei der Hauptzutat um eine der Hülsenfrüchte handelt, welche etwas längere Garzeiten erforden, wird in bevorzugter Ausführungsform die erste Charge für die Wasserphase zunächst in Wasser über einen Zeitraum von 15 Minuten gekocht und dann erst die aromatisierte Ölphase zugesetzt und 5 weitere Minuten köcheln gelassen.

### Beispiel 2

### Feiner Basmatireis (Paliala Pilaw):

Die in Wasser zu garenden (getrockneten) Hauptzutaten und Gewürze der separat zu verpackenden ersten Charge setzen sich wie folgt zusammen:

| | |
|---|---|
| Basmatireis | 225 g |
| Salz | 8,25 g |
| Rohrzucker | 0,5 g |
| Zwiebeln, gefriergetrocknet | 1,1 g |
| Kurkuma, gemahlen | 0,65 g |
| Knoblauch, gefriergetrocknet | 0,75 g |
| Lorbeerblatt | ½ St |

Die in Speiseöl aufzuschließenden Gewürze und/oder Kräuter der separat verpackten zweiten Charge setzen sich wie folgt zusammen:

| | |
|---|---|
| Kreuzkümmel | 0,3 g |
| Nelken | 4 St |
| Zimtstange | 3 cm |
| grüner Kardamom, ganze Kapsel | 4 St |

Zu der Gewürzmischung der zweiten Charge für die Ölphase werden 2 Esslöffel Speiseöl gegeben und erhitzt; wahlweise werden die 2 Esslöffel Speiseöl zunächst erhitzt und dann die Gewürzmischung zugesetzt. Es wird solange erhitzt, bis die Gewürze ihren Duft verströmen, dann wird die heiße, aromatisierte Ölphase mit 620 ml Wasser abgelöscht. Sodann wird die Reismischung zugegeben, umgerührt, aufgekocht und zugedeckt 10 Minuten köcheln gelassen. Daraufhin wird noch 10 Minuten bei kleinster Hitze garziehen gelassen, die Mahlzeit von der Kochstelle genommen nach 5-minütigem Stehenlassen nur noch mit einer Gabel aufgelockert.

## Patentansprüche

1. Verfahren zur Zubereitung einer Mahlzeit aus einem trockenen verpackten Halbfertiggericht zur Zubereitung einer Mahlzeit hoher geschmacklicher Güte, wobei
- die Mischung trockener oder getrockneter Zutaten in zwei verpackungsmäßig voneinander getrennten Chargen vorliegt, wobei
- die erste Charge sich aus den in wässriger Phase zu garenden und/oder aufzuschließenden getrockneten temperaturempfindlichen Zutaten zusammensetzt, und
- die zweite Charge aus in Speiseöl und/oder -fett aufzuschließenden temperaturunempfindlichen Zutaten besteht, deren fettlösliche Inhaltsstoffe
- das Speiseöl und/oder -fett aromatisieren und
- nach dem Vermischen derselben mit der in wässriger Phase befindlichen ersten Charge in Kombination mit dem Eigengeschmack und - geruch der Hauptzutaten und den geschmack- und geruchbildenden Inhaltsstoffen der ersten Charge der jeweils zuzubereitenden Mahlzeit nach dem Garen den typischen gustatorischen und olfaktorischen Gesamteindruck verleihen,
**dadurch gekennzeichnet, dass**
Speiseöl und/oder -fett mit den temperaturunempfindlichen Zutaten der zweiten Charge unter Erhitzen aromatisiert wird, die in der ersten Charge enthaltenen temperaturempfindlichen Zutaten zusammen mit den zu garenden Hauptzutaten in wässriger Phase aufgeschlossen und die wässrige Phase sodann mit dem aromatisierten Speiseöl und/oder -fett vermischt werden.

2. Verfahren nach Anspruch 1, **dadurch gekennzeichnet, dass** die Hauptzutaten in getrockneter Form in der separat verpackten ersten Charge mit den in wässriger Phase aufzuschließenden Gewürzen und/oder Kräutern und/oder Würzmitteln und/oder konsistenzgebenden Zutaten oder Zusatzstoffen enthalten sind.

3. Verfahren nach Anspruch 1 oder 2, **dadurch gekennzeichnet, dass** bei einer Kombination von Kräutern und Gewürzen in der Ölphase deren jeweilige Mahlgrade so aufeinander abgestimmt sind, dass die jeweilige optimale Freisetzung ihrer geschmacksbestimmenden Inhaltsstoffe bei gleicher Öltemperatur erfolgt.

4. Verfahren nach einem der Ansprüche 1 bis 3, **dadurch gekennzeichnet, dass** als Hauptzutaten Hülsenfrüchte verwendet werden.

5. Verfahren nach einem der Ansprüche 1 bis 3, **dadurch gekennzeichnet, dass** als Hauptzutat Reis verwendet wird.

6. Verfahren nach einem der Ansprüche 1 bis 3, **dadurch gekennzeichnet, dass** als Hauptzutat Nudeln verwendet werden.

7. Verfahren nach einem der Ansprüche 1 bis 3, **dadurch gekennzeichnet, dass** als Hauptzutat Getreide verwendet wird.

8. Verfahren nach einem der Ansprüche 1 bis 3, **dadurch gekennzeichnet, dass** als Hauptzutat ein Sojaextrudat verwendet wird.

9. Verfahren nach einem der Ansprüche 1 bis 8, **dadurch gekennzeichnet, dass** das Vermischen der wässrigen Phase mit dem aromatisierten Speiseöl und/oder -fett nach dem Garen der Hauptzutaten in der wässrigen Phase erfolgt.

10. Verfahren nach einem der Ansprüche 1 bis 8, **dadurch gekennzeichnet, dass** das Vermischen der wässrigen Phase mit dem aromatisierten Speiseöl und/oder -fett vor dem Fertiggaren der Hauptzutaten erfolgt.

11. Verfahren nach einem der Ansprüche 1 bis 10, **dadurch gekennzeichnet, dass** frische Hauptzutaten mit dem aromatisierten Speiseöl oder -fett glasiert und/oder angebraten und dann mit den in wässriger Phase befindlichen Zutaten der ersten Charge vermischt und gegart werden.

12. Verfahren nach einem der Ansprüche 1 bis 11, **dadurch gekennzeichnet, dass** das Speiseöl und/oder Fett zum Aromatisieren mit den Zutaten der zweiten Charge auf eine Temperatur im Bereich von 120°C bis 170°C erhitzt wird.

13. Verwendung eines nach einem der Ansprüche 1 bis 12 hergestellten trockenen verpackten Halbfertiggerichts zur Zubereitung einer Mahlzeit in Automaten.

## Claims

1. A method of preparing a meal from a dry packaged semi-ready meal for preparing a meal of high gustatorial quality wherein the mixture of dry and dried ingredients is provided in two batches packaged separate from each other, the first batch being composed of dried temperature-sensitive ingredients to be cooked and/or broken down in an aqueous phase and the second batch consisting of temperature-insensitive ingredients to be broken down in cooking oil and/or fat, whose fat-dissolving ingredients flavor the cooking oil and/or fat, and which, after mixing same with the first batch in the aqueous phase in combination with the inherent taste and odor of the staple ingredients and the gustatorial and olefactory ingredients of the first batch, endow the meal to be prepared in each case after cooking with its typical overall gustatorial and olefactory impact, **characterized by** the steps: flavoring cooking oil and/or fat with the temperature-insensitive ingredients of the second batch by heating, breaking down the temperature-insensitive ingredients contained in the first batch together with the staple ingredients to be cooked in the aqueous phase, and mixing the aqueous phase with the flavored cooking oil and/or fat.

2. A method set forth in claim 1, **characterized in that** the staple ingredients in dried form are contained in the separately packaged first batch with the spices and/or herbs and/or seasonings and/or consistency-enhancing ingredients or additives for breakdown in the aqueous phase.

3. A method as set forth in any of the claims 1 or 2, **characterized in that** the herbs and spices in combination in the oil phase are each ground to a degree relative to the other so that optimum release of each gustatorial component occurs at the same oil temperature.

4. A method as set forth in any of the claims 1 to 3, **characterized in that** legumes are used as the staple ingredients.

5. A method as set forth in any of the claims 1 to 3, **characterized in that** rice is used as the staple ingredient.

6. A method as set forth in any of the claims 1 to 3, **characterized in that** pasta is used as the staple ingredient.

7. A method as set forth in any of the claims 1 to 3, **characterized in that** cereals are used as the staple ingredient.

8. A method as set forth in any of the claims 1 to 3, **characterized in that** soya extrudate is used as the staple ingredient.

9. The method as set forth in any of the claims 1 to 8, **characterized in that** mixing the aqueous phase with the flavored cooking oil and/or fat is done after cooking the staple ingredients in the aqueous phase.

10. The method as set forth in any of the claims 1 to 8, **characterized in that** mixing the aqueous phase with the flavored cooking oil and/or fat is done before the staple ingredients are done.

11. The method as set forth in any of the claims 1 to 10, **characterized in that** fresh staple ingredients are glazed and/or seared with the flavored cooking oil and/or fat before then being mixed and cooked with the ingredients of the first batch in the aqueous phase.

12. The method as set forth in any of the claims 1 to 11, **characterized in that** the cooking oil and/or fat is heated for flavoring with the ingredients of the second batch to a temperature in the range 120°C to 170°C.

13. Use of a dried, packaged semi-ready meal prepared as set forth in any of the claims 1 to 12 for preparing a meal in vending machines.

## Revendications

1. Procédé pour la préparation d'un repas à partir d'un plat semi-fini sec emballé pour la préparation d'un repas d'une grande qualité gustative,
- le mélange d'ingrédients secs ou séchés étant présent en deux charges emballées séparément l'une de l'autre,
- la première charge se composant d'ingrédients séchés et sensibles à la température, à cuisiner et/ou à hydrolyser en phase aqueuse, et
- la seconde charge consistant en ingrédients insensibles à la température, à hydrolyser dans de l'huile et/ou de la graisse comestible, dont les composants solubles dans la graisse
- aromatisent l'huile et/ou la graisse comestible et
- après le mélange de ceux-ci avec la première charge se trouvant en phase aqueuse, produisent après cuisson, en combinaison avec la saveur et l'odeur propre des ingrédients principaux et des composants formant la saveur et l'odeur de la première charge, l'impression générale gustative et olfactive typique du repas à préparer,
**caractérisé en ce que**
l'huile et/ou la graisse comestible est aromatisée avec les ingrédients insensibles à la température de la seconde charge par réchauffement, que les ingrédients sensibles à la température contenus dans la première charge sont hydrolysés en phase aqueuse ensemble avec les ingrédients principaux à cuire et que la phase aqueuse est ensuite mélangée avec l'huile et/ou la graisse comestible aromatisée.

2. Procédé selon la revendication 1, **caractérisé en ce que** les principaux ingrédients sont contenus en forme séchée dans la première charge emballée séparément avec les épices et/ou herbes et/ou condiments et/ou ingrédients ou additifs donnant de la consistance qui sont à hydrolyser dans la phase aqueuse.

3. Procédé selon l'une quelconque des revendications 1 ou 2, **caractérisé en ce que** dans une combinaison d'herbes et d'épices dans la phase huileuse leurs degrés de mouture respectifs sont réciproquement adaptés de manière à ce que le dégagement optimal de leurs composants déterminant la saveur se fait à la même température d'huile.

4. Procédé selon l'une quelconque des revendications 1 à 3, **caractérisé en ce que** des légumineuses sont utilisées comme ingrédients principaux.

5. Procédé selon l'une quelconque des revendications 1 à 3, **caractérisé en ce que** du riz est utilisé comme ingrédient principal.

6. Procédé selon l'une quelconque des revendications 1 à 3, **caractérisé en ce que** des nouilles sont utilisées comme ingrédient principal.

7. Procédé selon l'une quelconque des revendications 1 à 3, **caractérisé en ce que** des céréales sont utilisées comme ingrédient principal.

8. Procédé selon l'une quelconque des revendications 1 à 3, **caractérisé en ce qu'**un produit d'extrusion du soja est utilisé comme ingrédient principal.

9. Procédé selon l'une quelconque des revendications 1 à 8, **caractérisé en ce que** le mélange de la phase aqueuse avec l'huile et/ou la graisse comestible aromatisée se fait après la cuisson des ingrédients principaux dans la phase aqueuse.

10. Procédé selon l'une quelconque des revendications 1 à 8, **caractérisé en ce que** le mélange de la phase aqueuse avec l'huile et/ou la graisse comestible aromatisée se fait avant l'achèvement de la cuisson des ingrédients principaux.

11. Procédé selon l'une quelconque des revendications 1 à 10, **caractérisé en ce que** des ingrédients principaux frais sont glacés et/ou revenus dans l'huile et/ou la graisse aromatisée et ensuite mélangés et cuits avec les ingrédients se trouvant en phase aqueuse de la première charge.

12. Procédé selon l'une quelconque des revendications 1 à 11, **caractérisé en ce que** l'huile et/ou la graisse comestible est réchauffée avec les ingrédients de la seconde charge à une température dans la plage de 120°C à 170°C pour être aromatisée.

13. Utilisation du plat semi-fini sec fabriqué selon l'une quelconque des revendications 1 à 12 pour la préparation d'un repas dans des distributeurs automatiques.
